# EUROPÄISCHE PATENTSCHRIFT

(11) **EP 0 723 344 B1**
(45) Veröffentlichungstag und Bekanntmachung des Hinweises auf die Patenterteilung: **20.09.2000**
(21) Anmeldenummer: 95120268.8
(22) Anmeldetag: 21.12.1995
(51) Int. Cl.: H04J 3/06

(54) **Synchrones digitales Nachrichtenübertragungssystem mit hierarchischem Synchronisierungsnetz**
Synchronous digital transmission system with hierarchical synchronisation network
Système numérique de transmission avec réseau hiérarchique de synchronisation

(30) Priorität: 24.12.1994 DE 4446511
(43) Veröffentlichungstag der Anmeldung: 24.07.1996
(60) Teilanmeldung: 00112542.6
(73) Patentinhaber: ALCATEL, 75008 Paris (FR)
(72) Erfinder: Wolf, Michael, D-74395 Mundelsheim (DE)
(74) Vertreter: Schätzle, Albin, Dipl.-Phys.

(56) Entgegenhaltungen:
- IEEE TRANSACTIONS ON COMMUNICATIONS, AUG. 1980, USA, Bd. COM-28, Nr. 8, pt.1, ISSN 0090-6778, Seiten 1234-1244, XP000577347 STOVER H A: "Network timing/synchronization for defense communications"
- BRITISH TELECOMMUNICATIONS ENGINEERING, Bd. 12, Nr. PART 03, 1.Oktober 1993, LONDON, GB, Seiten 207-215, XP000405932 ANDREWS M ET AL: "BT NORTHERN IRELAND STAR SDH NETWORK NISTAR"
- REVIEW OF THE ELECTRICAL COMMUNICATION LABORATORIES, JULY-AUG. 1977, JAPAN, Bd. 25, Nr. 7-8, ISSN 0029-067X, Seiten 717-729, XP002010777 EGAWA T ET AL: "Network synchronization system for DDX-2"
- ELECTRICAL COMMUNICATION, 1.Oktober 1993, Seiten 349-358, XP000425700 POWELL W E ET AL: "SYNCHRONIZATION AND TIMING OF SDH NETWORKS"

## Beschreibung

Die Erfindung betrifft ein Netzelement für ein synchrones digitales Nachrichtenübertragungssystem gemäß dem Oberbegriff des Anspruchs 1.

Ein synchrones digitales Übertragungssystem arbeitet z.B. gemäß einem Standard für synchrone digitale Hierarchie (SDH/SONET-Standard). In einem solchen digitalen Übertragungssystem sind einzelne Netzelemente durch unterschiedliche Übertragungsmedien (z.B. Kupferkabel, Lichtwellenleiter oder Funkstrecken) miteinander verbunden.

Eine Anbindung eines Netzelements an ein Übertragungsmedium erfolgt durch Schnittstelleneinrichtungen (network node interface), die z.B. aus den ITU-T Empfehlungen G.703 und G.957 bekannt sind. In der Empfehlung G.703 sind Festlegungen von elektrischen Eigenschaften solcher Schnittstelleneinrichtungen und in der Empfehlung G.957 sind Festlegungen von optischen Eigenschaften der Schnittstelleneinrichtungen angegeben. In einer Schnittstelleneinrichtung, die an einen Lichtwellenleiter angeschlossen ist, werden z.B. ankommende optische Signale durch einen optoelektrischen Wandler in elektrische Signale gewandelt.

Ein Netzelement ist z.B. eine Vermittlungsstelle für ein öffentliches Fernsprechnetz, oder ein Crossconnect oder ein Add/Drop Multiplexer. Ein in der Vermittlungsstelle eingesetztes Vermittlungsprinzip macht es erforderlich, daß alle Vermittlungsstellen im System synchron miteinander arbeiten. Einen Überblick, wie eine Synchronisierung der Vermittlungsstellen erfolgen kann, gibt der Artikel von M. Wolf et al, "Synchronisierung und Timing", Elektrisches Nachrichtenwesen (Alcatel), 4. Quartal 1993, Seiten 349 bis 358.

Dort sind zwei Verfahren zur Synchronisierung der Netzelemente genannt: Master/Slave-Synchronisierung und gegenseitige Synchronisierung.

Beim Master/Slave-Verfahren wird ein einziger Primär-Referenztakt zur Synchronisierung einer ersten Hierarchieebene von Knoten verwendet. Diese Knoten übergeben ihre abgeleiteten Takte an die Knoten einer nächsten Ebene und so weiter. Beim Verfahren der gegenseitigen Synchronisation sind alle Knoten gleichwertig über die bestehenden digitalen Verbindungen miteinander verbunden. In jedem Knoten wird aus den eintreffenden Taktsignalen und einem eigenen internen Takt ein mittlerer Phasenwert berechnet. Beim Master/Slave-Verfahren ist somit ein hierarchisches Synchronisierungssystem gegeben.

In einem System gemäß dem Standard für synchrone digitale Hierarchie (SDH) ist ein Rahmen festgelegt, der in einem Multiplexabschnitt einen als SOH bezeichneten Bereich hat. (SOH: Section Overhead). In diesem SOH wird ein Synchronisierungs-Qualitätsindikator übertragen, für den die Bits 5 bis 8 des S1-Bytes festgelegt sind. (Siehe z.B. ITU-T Empfehlung G. 707, G.708 oder G.709)

Dieser Synchronisierungs-Qualitätsindikator gibt eine Qualitätsklasse eines übertragenen standardisierten Referenztaktes an und bietet eine leistungsfähige, autonome Funktion zur Verbesserung des Qualitätsmanagements der Synchronisierung. Der Synchronisierungs-Qualitätsindikator ist allgemein als "synchronization status message" bekannt und wird im folgenden mit SSM bezeichnet. Durch die Bits 5 bis 8 des S1-Bytes werden u.a. z.B. standardisierte Referenztakte G. 811, G. 812 gemäß ITU-T oder eine Meldung "Don't use for synchronisation" festgelegt, die im folgenden als DNU bezeichnet wird.

In dem Artikel "Network Timing/Synchronization for Defense Communications" von H. Stover, IEEE Transactions on Communications Vol. COM-28, No. 8, August 1980, Seiten 1234-1244, werden verschiedene Master/Slave-Verfahren zur Synchronisierung von Netzknoten in einem digitalen Vermittlungsnetz diskutiert. Bei einem ersten als "SeIf-Organization (SO)" bezeichneten Verfahren wird automatisch ohne manuelles Eingreifen ein Master-Taktgenerator und eine bevorzugte Hierarchie der Synchronisation ausgewählt. Dabei wird vorab jedem Taktgenerator im Netz ein eindeutiger Rang zugewiesen und die Auswahl erfolgt in jedem Netzknoten anhand von Informationen, die von den direkt benachbarten Netzknoten empfangen werden. Die Informationen sind der Rang des vom sendenden Netzelement als Referenz benutzten Taktgenerators und die Anzahl der Netzknoten im Übertragungspfad zwischen dem als Referenz benutzten Taktgenerators und dem lokalen Knoten. Eine Auswahl erfolgt so, daß jeder Knoten im Netzwerk den Taktgenerator mit dem höchsten Rang über den kürzestmöglichen Übertragungspfad als Referenz auswählt. Dadurch entsteht eine Strukturierung des Netzes in Schichten, wobei alle Netzknoten mit derselben minimalen Anzahl von Netzknoten zwischen sich und dem Master-Taktgenerator derselben Schicht zugerechnet werden und der Master-Taktgenerator der einzige Repräsentant der obersten Schicht ist. Um aufaddierte Laufzeitfehler oder Störungen beim Umschalten auf eine andere Referenz zu verhindern, kann zusätzlich eine Phasenmessungen zwischen dem lokalen noch unsynchronisierten Takt und dem als Referenz ausgewählten empfangenen Takt durchgeführt und das Meßergebnis an alle angeschlossenen Knoten gesendet werden, die diese Meßergebnisse dann wiederum auswerten und bei ihrer Synchronisation berücksichtigen. Dabei werden in jedem Netzknoten nur Informationen ausgewertet, die von Netzknoten einer höheren Schicht stammen.

Eine weitere in dem Artikel diskutierte Verbesserung ("Phase Reference Combining (PRC)") sieht vor, daß zusätzlich auch Informationen ausgewertet werden, die von Netzknoten der eigenen Schicht stammen, wobei die Bildung von Schleifen vermieden werden muß, über welche fortwährend dieselbe Informationen hin und zurück oder im Kreis gesendet werden. Dazu werden die in jedem Knoten empfangenen Informationen in zwei Klassen eingeteilt: eine erste Klasse für Informationen von Knoten einer höheren Lage und eine zweite Klasse für Informationen von allen benachbarten Netzknoten die in der Hierarchie nicht niedriger sind als der lokale Knoten. Die Information der beiden Klassen werden an die benachbarten Netzelemente weitergeleitet. Zum Ableiten der eigenen Informationen der ersten Klasse verwendet jeder Knoten nur die von benachbarten Knoten einer höheren Schicht empfangenen Informationen der zweiten Klasse. Zum Ableiten der eigenen Informationen der zweiten Klasse werden auch von benachbarten Knoten der eigenen Schicht empfangene Informationen der ersten Klasse verwendet. Dadurch wird eine Schleifenbildung vermieden.

Die in obigem Artikel beschriebenen Verfahren machen jedoch eine aufwendige, nicht standardisierte Signalisierung zwischen den Netzelementen erforderlich. Für SDH- und SONET-Systeme ist hingegen die Verwendung der anfangs genannten SSM festgelegt, welche die zur Synchronisierung des sendenden Knotens ausgewählte Taktqualität angibt.

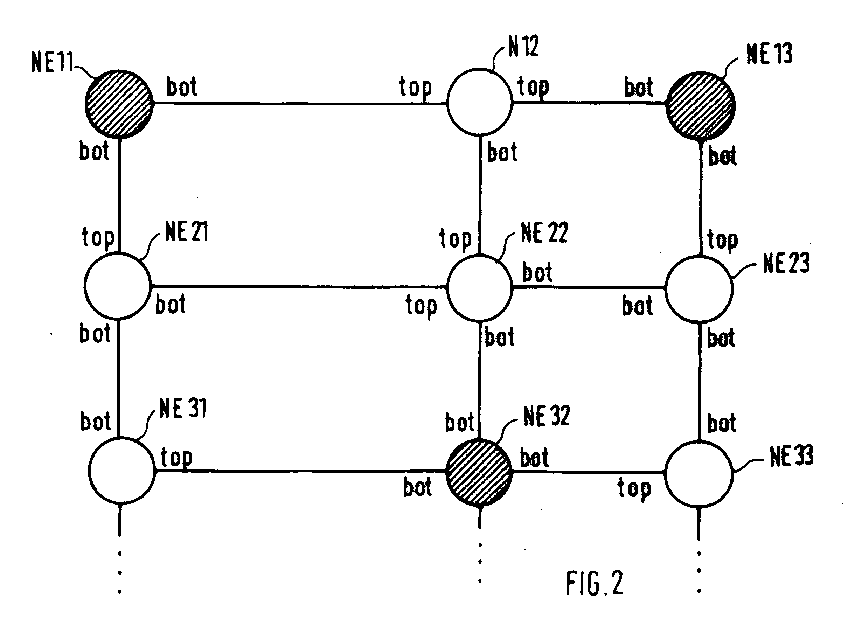

Aus einem Arbeitsdokument von B. Neihoff, "More on Synchronization Status Message problems", ETS/TM3/WG6, Working Document 22, Oslo, 25-29 October 1993, ist bekannt, daß bei der Verwendung von SSM Probleme entstehen können. Dazu gehören z. B. Synchronisierungsschleifen (timing loops), die entstehen, wenn wie in der dortigen Fig. 2 ein Netzelement (SDXC) seine ausgewählte Referenztaktquelle (selected source) verliert und mit Hilfe einer Auswahlprozedur (synchronization source selection algorithm, SSSA) eine andere Referenztaktquelle auswählt. Es ist auch erwähnt, daß solche Synchronisierungsschleifen bei jeder Netzwerkanordnung vorkommen können, in der zwei bidirektionale SSM Wege im gleichen Netzelement enden und dort auch erzeugt werden. In dem Arbeitsdokument wird zur Problemlösung vorgeschlagen, "enable/disable" Funktionen zu definieren.

Synchronisierungsschleifen können bei einer Resynchronisierung nach einem Fehlerfall gebildet werden, indem zwei Netzelemente sich gegenseitig über unterschiedliche Netzwerkpfade als Taktreferenzquelle auswählen.

Der Erfindung liegt daher die Aufgabe zugrunde, ein Netzelement für ein digitales Nachrichtenübertragungssystem anzugeben, mit dem Synchronisierungsschleifen vermieden werden können. Die Aufgabe wird gelöst durch die Merkmale des Anspruchs 1. Eine vorteilhafte Ausgestaltung ist dem abhängigen Anspruch zu entnehmen.

Vorteilhafte Ausführungen der Erfindung sind in den Unteransprüchen angegeben.

Die Erfindung wird im folgenden anhand von Zeichnungen näher erläutert. Es zeigen:
- Fig. 1: ein Netzelement, bei dem für Schnittstelleneinrichtungen zwei Prioritätsklassen festgelegt sind, und
- Fig. 2: ein digitales Nachrichtenübertragungssystem mit neuen Netzelementen.

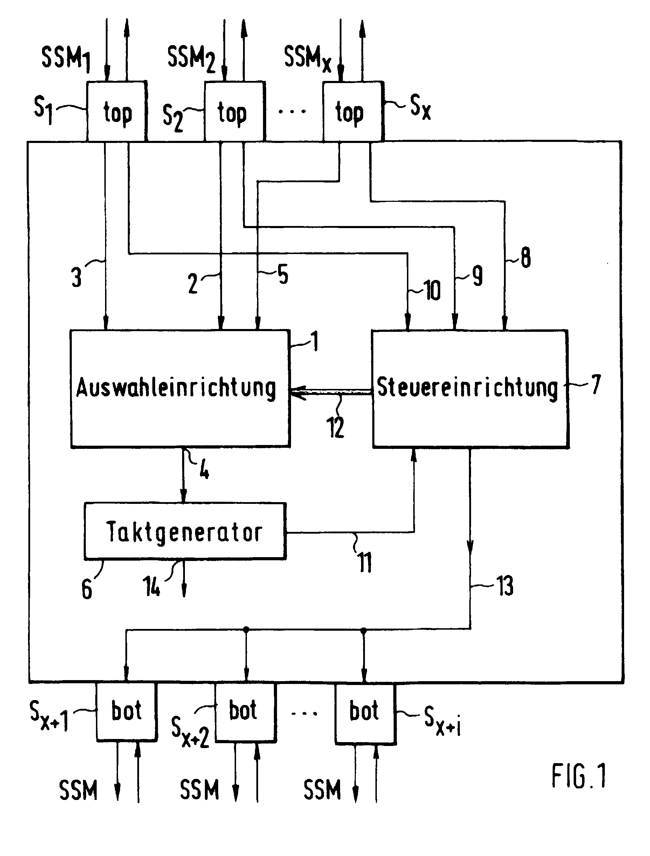

In Fig. 1 ist ein Netzelement gezeigt, das z.B. Teil eines nach dem Standard für synchrone digitale Hierarchie (SDH) arbeitendes Nachrichtenübertragungssystem ist.

In einem solchen digitalen Nachrichtenübertragungssystem sind die Netzelemente z.B. durch Kupferkabel und/oder Lichtwellenleiter miteinander verbunden. Das Netzelement, das z.B. ein Crossconnect ist, hat eine Anzahl von Schnittstelleneinrichtungen S₁,...,Sₓ,...,Sₓ₊ᵢ.

In Fig. 1 sind sechs Schnittstelleneinrichtungen S₁, S₂, Sₓ, Sₓ₊₁, Sₓ₊₂, Sₓ₊ᵢ eingezeichnet; zur Verdeutlichtung befinden sich drei Schnittstelleneinrichtungen S₁, S₂, Sₓ auf einer Seite, die im folgenden als obere Seite bezeichnet wird, des Netzelementes und drei Schnittstelleneinrichtungen Sₓ₊₁, Sₓ₊₂, Sₓ₊ᵢ auf einer gegenüberliegenden Seite, die im folgenden als untere Seite bezeichnet wird.

An jeder Schnittstelleneinrichtung S₁, S₂, Sₓ der oberen Seite kommt eine SSM an, die entsprechend den Schnittstelleneinrichtungen S₁, S₂, Sₓ mit SSM₁, SSM₂ und SSMₓ bezeichnet sind. Von jeder Schnittstelleneinrichtung S₁, S₂, Sₓ kann auch eine SSM, z.B. mit der Meldung DNU ausgesendet werden. In Fig. 1 sind die Richtungen der SSM durch Pfeile mit entsprechender Richtung an den Schnittstelleneinrichtungen S₁, S₂, Sₓ eingezeichnet.

Das Netzelement hat außerdem eine Auswahleinrichtung 1, in der ein Taktfilter enthalten ist, einen Taktgenerator 6 und eine Steuereinrichtung 7. Jede Schnittstelleneinrichtung S₁, S₂, Sₓ ist über eine Verbindung 3, 2, 5 mit der Auswahleinrichtung 1 verbunden. Der Auswahleinrichtung 1 werden dadurch die Takte von an den Schnittstelleneinrichtungen S₁, S₂, Sₓ ankommenden STM-N Signalen zugeführt. Außerdem ist jede Schnittstelleneinrichtung S₁, S₂, Sₓ über eine Verbindung 8, 9, 10 mit der Steuereinrichtung 7 verbunden. Über diese Verbindungen 8, 9, 10 werden die Steuereinrichtung 7 jeweils die SSM, SSM₂, SSMₓ zugeführt. Die Steuereinrichtung 7 ist ihrerseits über eine Steuerleitung 12 mit der Auswahleinrichtung 1 verbunden, und über eine Verbindung 11 mit dem Taktgenerator 6. Über eine Verbindung 4 ist die Auswahleinrichtung 1 mit dem Taktgenerator 6 verbunden.

Mit den Schnittstelleneinrichtungen Sₓ₊₁, Sₓ₊₂, Sₓ₊ᵢ der unteren Seite ist die Steuereinrichtung 7 über eine Verbindung 13 verbunden. An einem Ausgang 14 des Taktgenerators 6 tritt der Takt aus, der an andere Netzelemente weitergegeben wird. Dafür ist der Ausgang 14 mit jeder Schnittstelleneinrichtung S₁,...Sₓ...Sₓ₊ᵢ verbunden; in Fig. 1 ist dies zur Vereinfachung durch einen am Ausgang 14 eingezeichneten Pfeil angedeutet.

Zur Funktion der einzelnen Bestandteile:

Das in der Auswahleinrichtung 1 vorhandene Taktfilter ist durch die ITU-T-Empfehlung G.812 oder G81s spezifiziert und hat die Aufgabe, Takstörungen (Jitter und Wander) herauszufiltern. Eine weitere Aufgabe des Taktfilters besteht darin, bei Ausfall seines Eingangssignals die Frequenz seines Ausgangssignals so konstant wie möglich zu halten.

Die Steuereinrichtung 7 wertet die ankommenden SSM, SSM₂, SSMₓ aus und bestimmt daraus eine Schnittstelleneinrichtung S₁, S₂, Sₓ als Taktreferenzquelle. Die Auswahleinrichtung 1 wird daraufhin so von der Steuereinrichtung 7 gesteuert, daß der Takt der Taktreferenzquelle zum Taktgenerator 6 weitergeleitet wird. Der Taktgenerator 6 ist z.B. ein Phasenregelkreis (PLL), der nach einer Synchronisierung auf den von der Auswahleinrichtung 6 kommenden Takt, diesen Takt über den Ausgang 14 weitergibt. Ist eine Synchronisierung des Taktgenerators 6 nicht möglich, weil z.B. zu viel Rauschen den Takt begleitet, oder weil der Takt ausgefallen ist, gibt der Taktgenerator 6 der Steuereinrichtung 7 eine entsprechende Nachricht. Eine solche Nachricht veranlaßt z.B., daß das Netzelement in einen Wartezustand (Hold-over) übergeht. Die Steuereinrichtung 7 erzeugt eine SSM, die dem aktuellen Zustand des Netzelements entspricht. Diese SSM kann eine der an den Schnittstelleneinrichtungen S₁, S₂, Sₓ der oberen Seite empfangen SSM₁, SSM₂, SSMₓ sein. Es kann aber auch eine neue, von der Steuereinrichtung 7 erzeugte SSM sein.

Die Schnittstelleneinrichtungen Sₓ₊₁, Sₓ₊₂, Sₓ₊₁ der unteren Seite geben jeweils die ausgewählte oder erzeugte SSM weiter; ankommende SSM werden dagegen ignoriert. Auch an diesen Schnittstelleneinrichtungen Sₓ₊₁, Sₓ₊₂, Sₓ₊ᵢ sind die Richtungen der SSM durch Pfeile mit entsprechender Richtung eingezeichnet. Bei diesem Netzelement sind für die Schnittstelleneinrichtungen S₁,...,Sₓ,...Sₓ₊ᵢ zwei Klassen (top, bottom) festgelegt: Die Schnittstelleneinrichtungen S₁, S₂, Sₓ der oberen Seite haben die Klasse "top" und die Schnittstelleneinrichtungen Sₓ₊₁, Sₓ₊₂, Sₓ₊ᵢ der unteren Seite die Klasse "bottom". Die Klassen "top, bottom" (abgekürzt: bot) sind in der Fig. 1 an den Schnittstelleneinrichtungen S₁,...,Sₓ,..., Sₓ₊ᵢ eingezeichnet.

Die Schnittstelleneinrichtungen S₁, S₂, Sₓ der Klasse "top" stellen mögliche Taktreferenzquellen dar, aus denen eine durch die Steuereinrichtung 7 ausgewählt wird. Das bedeutet, daß mit den Schnittstelleneinrichtungen S₁, S₂, Sₓ dieser Klasse "top" Schnittstelleneinrichtungen eines oder mehrerer anderer Netzelemente verbunden sind, deren SSM zur Synchronisierung prinzipiell akzeptiert werden. Die Schnittstelleneinrichtungen Sₓ₊₁, Sₓ₊₂, Sₓ₊ᵢ der Klasse "bottom" ignorieren wie bereits erwähnt ankommende SSM, d.h. von anderen Netzelementen ankommende SSM wird nicht zur Synchronisierung verwendet.

Mit solchen im vorhergehenden beschriebenen Netzelementen kann ein Synchronisierungsnetz auch in einem nichthierarchischen Übertragungs- und Vermittlungssystem geschaffen werden. Es kann durch Festlegung der Klassen "top, bottom" einer Schnittstelleneinrichtung bestimmt werden, ob das Netzelement ein anderes Netzelement synchronisieren darf oder nicht.

In Fig. 2 ist ein beispielhaftes hierarchisches Synchronisierungsnetz mit neun Netzelementen NE11...NE33 gezeigt. Diese Netzelemente NE11...NE33 sind in Form eines Gitters (3x3 Matrix) dargestellt, wobei die Gitterpunkte die idealisierten geographischen Orte der Netzelemente NE11...NE33 darstellen und die Gitterlinien die Kabel- bzw. Funkverbindungen zwischen den Netzelementen. An den Netzelementen NE11, NE13, NE32 wird ein Referenztakt in das hierarchische Synchronisierungsnetz eingespeist. Der Referenztakt (der "Mastertakt") wird von einer Referenztaktquelle erzeugt, die z.B. eine Cäsium-Uhr ist, die eine Taktstabilität von 10⁻¹¹ hat. In Fig. 2 sind die Netzelemente NE11, NE13, NE32 als Vollkreise dargestellt und die restlichen Netzelemente NE12, N21...NE31, NE33, die keine Referenztaktquelle haben, als nicht ausgefüllte Kreise. An den einzelnen Netzelementen NE11...NE33 sind die Klassen "top" und "bottom" angedeutet.

Die Netzelemente NE11, NE13, NE32 haben nur Schnittstelleneinrichtungen mit der Klasse "bottom"; von anderen Netzelementen können sie nicht synchronisiert werden.

Das Netzelement NE21 akzeptiert nur einen vom Netzelement NE11 kommenden Takt (Klasse "top") und ignoriert SSM, die von den Netzelementen NE22, NE31 kommen (Klasse "bottom").

Die übrigen Synchronisierungseinrichtungen für die einzelnen Netzelemente ergeben sich aus Fig. 2, so daß auf deren Erläuterung an dieser Stelle verzichtet wird.

## Patentansprüche

1. Netzelement für ein synchrones digitales Nachrichtenübertragungssystem,
- mit mehreren Schnittstelleneinrichtungen (S1...Sx...Sx+i) zum Empfangen von Nachrichtensignalen, die jeweils einen Synchronisierungs-Qualitätsindikator (SSM, SSM1, ..., SSMx) enthalten,
- mit einem Taktgenerator (6) und
- mit einer Auswahleinrichtung (1) zur Auswahl einer der Schnittstelleneinrichtungen anhand der empfangenen Synchronisierungs-Qualitätsindikatoren (SSM1, ..., SSMx) als Taktreferenzquelle für die Synchronisierung des Taktgenerators (6),
**dadurch gekennzeichnet,** daß
die Schnittstelleneinrichtungen (S1..., Sx, ..., Sx+i) in zwei Klassen (top, bot) eingeteilt sind, wobei die Schnittstelleneinrichtungen (S1,..., Sx) der ersten Klasse (top) mögliche Taktreferenzquellen sind und die Schnittstelleneinrichtungen (Sx+1, ..., Sx+i) der zweiten Klasse (bot) nicht für die Synchronisierung verwendet werden.

2. Netzelement nach Anspruch 1 mit einer an die Auswahleinrichtung (1) angeschlossenen Steuereinrichtung (7), die an die Schnittstelleneinrichtungen (S1,..., Sx) der ersten Klasse (top) angeschlossen ist (8, 9, 10), bei dem die Steuereinrichtung (7) dermaßen ausgestaltet ist, daß sie an den Schnittstelleneinrichtungen (S1,..., Sx) ankommende Synchronisierungs-Qualitätsindikatoren (SSM1,...,SSMx) auswertet und eine Schnittstelleneinrichtung (S1,...,Sx) als Taktreferenzquelle auswählt, deren Takt die Auswahleinrichtung (1) dem Taktgenerator (6) zuführt, bei dem der Taktgenerator (6) der Überprüfung des Taktes auf Synchronisierbarkeit und Weitergabe an die Schnittstelleneinrichtungen (S1,..., Sx+i) dient und bei dem die Steuerungseinrichtung (7) zur Weitergabe eines der Synchronisations-Qualitätsindikatoren (SSM1, ..., SSMx) oder eines von ihr erzeugten Synchronisations-Qualitätsindikators an die Schnittstelleneinrichtungen (S1, ..., Sx+i) der zweiten Klasse (bot) konzipiert ist.

## Claims

1. A network element for a synchronous digital communication system, comprising
- a plurality of interface units (S1, ..., Sx, ..., Sx+i) for receiving communications signals each containing a synchronization quality marker (SSM, SSM1, ..., SSMx),
- a clock generator (6), and
- a selection unit (1) for selecting one of the interface units as a clock reference source for synchronizing the clock generator (6), the selection being based on the received synchronization quality markers (SSM1,..., SSMx)
**characterized in** that
the interface units (S1,..., Sx, ..., Sx+i) are grouped in two classes (top, bot), with the interface units (S1, ..., Sx) of the first class (top) being possible clock reference sources, and the interface units (Sx+1, ..., Sx+i) of the second class (bot) being not used for synchronization.

2. A network element as claimed in claim 1, comprising a control unit (7) coupled to the selection unit (1) and connected (8, 9, 10) to the interface units (S1, ..., Sx) of the first class (top), wherein the control unit (7) is adapted to evaluate synchronization quality markers (SSM1, ..., SSMx) arriving at the interface units (S1, ..., Sx) and to select one of the interface units (S1, ..., Sx) as a clock reference source, whose clock signal is applied by the selection unit (1) to the clock generator (6), wherein the clock generator (6) serves to check the clock signal for synchronizability and to transfer the clock signal to the interface units (Sx+1, ..., Sx+i), and wherein the control unit (7) is designed to transfer one of the synchronization quality markers (SSM1, ..., SSMx) or a synchronization quality marker generated by the control unit to the interface units (Sx+1, ..., Sx+i) of the second class (bot).

## Revendications

1. Elément de réseau pour un système de transmission de messages numérique, synchrone, comprenant :
- plusieurs dispositifs d'interface (S1 ... Sx ... Sx+i) pour recevoir des signaux de message contenant respectivement un indicateur de qualité de synchronisation (SSM, SSM1, ..., SSMx),
- un générateur d'horloge (6) et
- un dispositif de sélection (1) pour sélectionner l'un des dispositifs d'interface à l'aide des indicateurs de qualité de synchronisation reçus (SSM1, ..., SSMx) comme source de référence d'horloge pour la synchronisation du générateur d'horloge (6),
caractérisé en ce que
les dispositifs d'interface (S1 ..., Sx, ..., Sx+i) sont divisés en deux classes (top, bot), les dispositifs d'interface (S1, ..., Sx) de la première classe (top) étant des sources de référence d'horloge possibles et les dispositifs d'interface (Sx+1, ..., Sx+i) de la deuxième classe (bot) n'étant pas utilisés pour la synchronisation.

2. Elément de réseau selon la revendication 1, comprenant un dispositif de commande (7) raccordé au dispositif de sélection (1), le dispositif de commande étant raccordé aux dispositifs d'interface (S1, ..., Sx) de la première classe (top) (8, 9, 10), dans lequel le dispositif de commande (7) est réalisé de telle sorte qu'il évalue des indicateurs de qualité de synchronisation (SSM1, ..., SSMx) reçus par les dispositifs d'interface (S1, ..., Sx) et sélectionne un dispositif d'interface (S1, ..., Sx) comme source de référence d'horloge, dont le cycle d'horloge est amené par le dispositif de sélection (1) au générateur d'horloge (6), dans lequel le générateur d'horloge (6) sert à vérifier le cycle d'horloge en vue de la capacité de synchronisation et à le retransmettre aux dispositifs d'interface (S1, ..., Sx+i), et dans lequel le dispositif de commande (7) est conçu pour retransmettre aux dispositifs d'interface (S1, ..., Sx+i) de la deuxième classe (bot) l'un des indicateurs de qualité de synchronisation (SSM1, ..., SSMx) ou un indicateur de qualité de synchronisation généré par celui-ci.
